(19) Europäisches Patentamt
European Patent Office
Office européen des brevets

(11) Veröffentlichungsnummer: **0 003 798**
**B1**

(12) # EUROPÄISCHE PATENTSCHRIFT

(45) Veröffentlichungstag der Patentschrift: **09.06.82**

(21) Anmeldenummer: **79100434.4**

(22) Anmeldetag: **14.02.79**

(51) Int. Cl.³: **C 08 G 14/12,**
C 08 G 14/06, C 08 L 61/34

(54) **Verfahren zur Herstellung modifizierter Aminoplastharze.**

(30) Priorität: **23.02.78 DE 2807744**

(43) Veröffentlichungstag der Anmeldung:
**05.09.79 Patentblatt 79/18**

(45) Bekanntmachung des Hinweises auf die Patenterteilung:
**09.06.82 Patentblatt 82/23**

(84) Benannte Vertragsstaaten:
**BE CH DE FR IT**

(56) Entgegenhaltungen:
**FR - A - 1 074 043**
**GB - A - 949 713**
**NL - C - 63 270**

(73) Patentinhaber: **BASF Aktiengesellschaft**
**Carl-Bosch-Strasse 38**
**D-6700 Ludwigshafen (DE)**

(72) Erfinder: **Nieberle, Juergen, Dr.**
**Prager Strasse 23**
**D-6700 Ludwigshafen (DE)**
Erfinder: **Reuther, Wolfgang, Dr.**
**Am Pferchelhang 16**
**D-6900 Heidelberg-Ziegelhausen (DE)**
Erfinder: **Weiss, Wolfram, Dr.**
**Bruesseler Ring 53**
**D-6700 Ludwigshafen (DE)**
Erfinder: **Eisele, Wolfgang, Dr.**
**Niedererdstrasse 103**
**D-6700 Ludwigshafen (DE)**
Erfinder: **Leigemann, Ludwig**
**Amsterdamer Strasse 16**
**D-6700 Ludwigshafen (DE)**
Erfinder: **Duda, Ulrich-Michael, Dr.**
**Max-Slevogt-Strasse 13 a**
**D-6710 Frankenthal (DE)**

EP 0 003 798 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung modifizierter Aminoplastharze

Die Erfindung betrifft modifizierte Aminoplastharze, die als Modifizierungsmittel Äthoxylierungsprodukte von bestimmten Phenol-Formaldehyd-Kondensaten enthalten.

Aminoplastharze im Sinne der Erfindung sind harzartige Produkte und deren Lösungen, die durch Vorkondensation von Amino- oder Iminogruppen enthaltenden Verbindungen, den sogenannten Aminoplastbildnern, mit Carbonylverbindungen und gegebenenfalls Alkanolen entstehen und die unter Einfluß von hohen Temperaturen und/oder sauren Katalysatoren unter Vernetzung zu Makromolekülen weiterkondensieren können.

Aminoplaste haben im Laufe der industriellen Entwicklung ständig an Bedeutung gewonnen und werden für viele Zwecke verwendet. So sind sie beispielsweise als vernetzende Bindemittel in wasserlöslichen und in lösungsmittellöslichen, Lackkombinationen und für hydroxylgruppenhaltige Latices und Dispersionsbinder, zur Herstellung von Preßmassen, als wasserfeste Klebstoffe für die Holzverleimung, zur Herstellung von Schichtstoffen, zum Tränken von Kraftpapier- und Gewebebahnen bei der Oberflächenbeschichtung von Plattenmaterial, insbesondere von Holzspanplatten und bei der Herstellung von Umleimern unentbehrlich. Für die Anwendung der Aminoplaste in vielen Bereichen sind Oberflächenhärte, Kratzfestigkeit, Trockenhitzebeständigkeit, Resistenz gegen Wasserdampf, Haftfestigkeit und hohe Elastizität der durch einen durch Säure- und/oder Hitzeinwirkung bewirkten Härtungsprozeß daraus entstehenden ausgehärteten Aminoplastharze besonders erwünschte Eigenschaften.

Ein wichtiger Anwendungsbereich der Aminoplaste, besonders der Melaminharze, ist die Herstellung von Schichtstoffen bzw. die Oberflächenbeschichtung von Plattenmaterialien. Dabei wird auf einen Träger, der seinerseits aus Kunststoff, bevorzugt aber aus einem Holzwerkstoff (Holzfaser oder Holzspanplatte) besteht, eine Dekor-bzw. Schutzschicht dadurch aufgebracht, daß gemusterte oder einfarhige Papier- bzw. Gewebebahnen mit geeigneten Aminoplastharzen getränkt und mit einem bestimmten Restfeuchtegehalt auf die Platten des Werkstoffes auflaminiert (durch Druck aufgebracht) werden. Der Preßdruck kann dabei 1 bis 25 $N/mm^2$ und die Temperatur 120 bis 200°C betragen. Während des Preßvorganges härtet das Aminoplastharz thermisch aus, bildet eine Schutzschicht und verbindet die Papier- bzw. Gewebebahn mit der Platte des Werkstoffs. Die beschichteten Holzwerkstoffe und Schichtstoffe zeichnen sich durch gute chemische und physikalische Widerstandsfähigkeit aus. Die bisher zum Tränken der für die Dekor- bzw. Schutzschicht vorgesehenen Papier- bzw. Gewebebahnen benutzten Aminoplaste besitzen jedoch im ausgehärteten Zustand nur eine geringe Elastizität, weshalb mit diesen Harzen hergestellte Oberflächen zur Rißbildung neigen.

Es hat nicht an Versuchen gefehlt, die mangelnde Elastizität der Dekorschicht durch Zusätze zu den Tränkharzen zu beseitigen oder zu verringern. Insbesondere wurden als Zusätze Caprolactam, mehrwertige Alkohole, wie Sorbit und Zucker sowie aromatische Sulfonamide empfohlen. Bei derartigen Zusätzen wird jedoch die Wasserfestigkeit der ausgehärteten Harze ungenügend, wenn die Elastizität ausreichen soll.

Es wurde nun gefunden, daß man modifizierte Aminoplastharze, die zur Oberflächenbeschichtung geeignet sind ("Tränkharze"), durch Kondensation von Carbonylverbindungen und Aminoplastbildnern, wobei vor, während oder nach der Kondensation modifizierende Mittel zugesetzt werden, dadurch erhält, daß man als ein modifizierendes Mittel ein Kondensationsprodukt aus Formaldehyd und einem Phenol mit einem Molverhältnis von Formaldehyd, zu Phenol zwischen 0,4 : 1 und 0,9 : 1, das zur selbständigen Härtung nicht befähigt ist ("Novolak") und mit wenigstens 2 Mol Äthylenoxid je Mol Phenol umgesetzt wurde, in einer wirksamen Menge zusetzt, Solchen Novolaken wird die allgemeine Formel

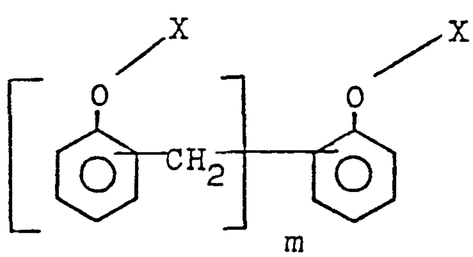

$$X = (-CH_2CH_2-O)_nH$$

zugeschrieben, wobei m eine Zahl von 1 bis etwa 30 und n eine Zahl von durchschittlich mindestens 2, vorzugsweise 3 bis 10 bedeutet. Verbindungen, in denen m eine Zahl von — im Mittel — in der Nähe von 1 ist, überwiegen.

Die Menge des erfindungsgemäß den Aminoplasten zugesetzten Modifizierungsmittels beträgt gewöhnlich 0,5 bis 15, vorzugsweise 1 bis 5 Gewichtsprozent, bezogen auf den Festkörpergehalt des Aminoplasten. Während geringere Menden lediglich entsprechend geringere Wirkungen hervorrufen, können größere Mengen allmählich den Charakter des Aminoplastharzes selbst verändern. Auch muß bei größeren Anteilen u.U. noch Formaldehyd zur Härtung zugesetzt werden.

Als Aminoplastbildner kommen z.B. Harnstoff, Thioharnstoff, Dicyandiamid, Guanamine, wie Aceto- oder Benzoguanamin, insbesondere jedoch Melamin und als Carbonylverbindungen z.B. Acetaldehyd, aromatische Aldehyde, Ketone, insbesondere jedoch Formaldehyd in Betracht. Auch Mischungen dieser Aminoplastbildner und/oder der genannten Carbonylverbindungen können zur Herstellung des Aminoplasten verwendet werden. Melamin-Formaldehyd-Kondensationsprodukte und deren Mischkondensate oder Mischungen mit anderen Aminoplastbildnern und Formaldehyd sowie deren Verätherungsprodukte mit kurzkettigen Alkanolen haben sich zur Herstellung erfindungsgemäßer Harze besonders bewährt. Vorzugsweise sind unter Melamin-Formaldehyd-Kondensaten im Sinne der Erfindung solche Aminoplaste zu verstehen, die 60 bis 100 Mol% Melamin als Aminoplastbildner und 60 bis 100 Mol% Formaldehyd als Carbonylverbindung enthalten.

Das Molverhältnis von Carbonylverbindungen zu Aminoplastbildnern liegt, am Beispiel von Formaldehyd und Melamin dargestellt, im allgemeinen bei 1,4 : 1 bis 2,2 : 1, insbesondere 1,4 : 1 bis 2 : 1. Wenn außer Melamin andere Aminoplastbildner verwendet bzw. mitverwendet werden, ändert sich u.U. das Molverhältnis nach den bekannten Regeln geringfügig.

Die erfindungsgemäß modifizierten Aminoplaste sind für alle bisher bekannten Anwendungsbereiche ausgezeichnet geeignet und insbesondere dort, wo eine besonders hohe Elastizität der ausgehärteten Produkte von besonderer Bedeutung ist. Besonders wertvoll sind die erfindungsgemäßen Aminoplaste demnach für die Herstellung von Schichstoffen und beschichteten Holzwerkstoffen. Es zeigt sich nämlich, daß die Rißbildung in der Oberfläche von Schichtstoffen und Holzwerkstoffen beseitigt bzw. die Elastizität der Oberfläche wesentlich erhöht werden kann, wenn die für die Dekor- bzw. Schutzschicht vorgesehene Papier- bzw. Gewebebahn mit einem erfindungsgemäßen Aminoplast getränkt und anschließend in an sich bekannter Weise auf die Holzwerkstoffplatte auflaminiert oder zu einem Schichtstoff verarbeitet wird.

Die erfindungsgemäß modifizierten Aminoplaste werden erhalten, indem man einen Aminoplastbildner mit einer Carbonylverbindung und gegebenenfalls mit üblichen sonstigen modifizierenden Mitteln in bekannter Weise in wäßriger Lösung kondensiert und vor, während oder nach der Kondensation bis zu 15 Gewichtsprozent, vorzugsweise 0.5 bis 10 und insbesondere 1 bis 5 Gewichtsprozent, bezogen auf den Festkörpergehalt des Aminoplastvorkondensates, des erfindungsgemäßen Modifizierungsmittels zumischt. Bevorzugt ist der Zusatz während bzw. vor der Kondensation.

Den erfindungsgemäßen Aminoplasten können auch hydrolysierbare Salze schwacher bis starker Carbonsäuren, Sulfonsäuren oder Mineralsäuren, beispielsweise Diäthanolaminacetat, Äthanolaminhydrochlorid, Äthylendiaminacetat, Ammoniumrhodanid, Ammoniumlactat oder Äthylendiaminphosphat zugefügt werden, um die Härtung zu beschleunigen, ohne daß sich dadurch die Elastizität der Überzüge verschlechtert.

Bei der Herstellung der Harze können auch noch andere bekannte Modifizierungsmittel, wie ein- oder mehrwertige Alkohole, Zucker, Säureamide wie Harnstoff, Thioharnstoff, Dimethylformamid oder Caprolactam, Salze der Amidosulfosäure und aromatische Sulfonsäureamide zugefügt werden. Die Mittel können sich gegenseitig ergänzen oder teilweise vertreten. Die Kondensation der Harze wird in der Regel bis zu einer begrenzten Wasserverdünnbarkeit fortgeführt. In manchen Fällen, z.B. bei Zusatz von größeren Mengen von Salzen der Amidosulfosäure können die erhaltenen Harze auch unbegrenzt wasserlöslich werden. Die Harze werden gewöhnlich als wäßrige Lösungen gehandelt; in besonderen Fällen können daraus Pulver hergestellt werden, die später wieder aufgelöst werden können.

Die als Modifizierungsmittel verwendeten oxalkylierten Novolakharze werden nach bekannten Herstellungsverfahren erhalten. Geeignete Verfahren sind z.B. in der DE—A 634 003 beschrieben.

Bekannt ist z.B., daß nicht-selbständig härtbare (Novolak)-Harze durch saure Kondensation von Phenol bzw. Phenolen und besonders Formaldehyd in wäßriger oder wasserfreier Umgebung erhalten werden, wobei als Katalysatoren Säuren oder sauer reagierende Salze, wie z.B. Zinkacetat und Ansolvo-Säuren (Lewis-Säuren) in Frage kommen. Die Molverhältnisse von Formaldehyd zum Phenol werden dabei so gewählt, daß die bifunktionell wirkende Carbonylverbindung (also Formaldehyd) im Unterschuß vorliegt und somit weder Vernetzung noch Ausbildung langer Molekülketten (Hochpolymerer) eintritt. Ein Molverhältnis von 0,4 bis 0,9 ist in jedem Falle geeignet.

Als Phenole kommen außer Hydroxybenzol auch z.B. Naphthole, Kresole, Xylenole und mehrwertige Phenole wie Resorcin in Frage.

Für die Zwecke der Erfindung gut geeignet sind mit z.B. Oxalsäure kondensierte Novolake, die praktisch farblos sind, aber bei ihrer Verwendung etwas zur Entmischung neigen; problemlos zu verarbeiten, wenn auch schwach gefärbt sind z.B. mit Zinkacetat kondensierte Novolake. Die Kondensation geschieht unter üblichen Bedingungen, z.B. bei 80 bis 120°C.

Die Umsetzung der Novolak-Harze mit Äthylenoxid geschieht ebenfalls nach üblichen Verfahren, Alkohols.

Vorprodukte zur Herstellung dekorativer Schichtstoffe oder dekorativ beschichteter Holzwerkstoffplatten werden in der Weise hergestellt, daß man Papier- oder Gewebebahnen mindestens in der Deckschicht mit der Aminoplastlösung imprägniert und auf einen bestimmten Restfeuchtegehalt bei Temperaturen von 110 bis 160°C trocknet. Die getränkten Papiere bzw. Gewebebahnen werden zusammen zur Herstellung von Schichtstoffen mit mehreren Lagen mit Phenolharz imprägnierter Kraftpapiere als Trägerschicht unter erhöhtem Druck und Temperatur zu einem

Schichtstoff gepreßt. Die Preßtemperaturen betragen ca. 120 bis 160°C, der Preßdruck 8 bis 12 $N/mm^2$; die Preßzeit richtet sich nach der Stärke und — bei Etagen-Pressen — der Menge der pro Etage hergestellten Schichtstoffe und kann z.B. 10 bis 80 Minuten betragen. Vor dem Entfernen wird zweckmäßigerweise auf ca. 60 bis 70°C zurückgekühlt. Zur Herstellung von beschichteten Holzwerkstoffen werden die getränkten Papier- bzw. Gewebebahnen auf die vorbereitete Holzwerkstoffplatte unter Drucken von meist 1,5 bis 2,5 $N/mm^2$ und Temperaturen von 120 bis 200°C aufgepreßt.

Die so hergestellten beschichteten Holzwerkstoffe und Schichtstoffe zeichnen sich z.B. dadurch aus, daß die Oberfläche nach einer Temperprüfung (z.B. DIN 68 765 oder DIN 53 799, Ziffer 4.7.2; 17 Stunden bei 70°C) nicht mehr reißen und nach Einwirkung von Wasserdampf (vgl. DIN 53 799, Ziffer 4.11) keine Veränderung der Oberfläche aufweisen.

Im Gegensatz dazu treten Risse auf, wenn ein entsprechen der Aminoplast ohne Zusatz der beschriebenen Modifizierungsmittel zur Tränkung verwendet wird.

Der zur Beurteilung des Rißverhaltens wichtige und daher auch in den folgenden Beispielen angegebene Aushärtungsgrad wird durch den bekannten Kitontest ermittelt und in einer sechsstufigen Skale angegeben, wobei die Stufe 1 eine sehr gute und die Stufe 6 eine sehr schlechte Aushärtung bedeutet. Die in den Beispielen verwendeten Mengenangaben beziehen sich auf das Gewicht.

*Herstellungsbeispiele für Novolak-Harze*

A) 1 250 g Phenol werden auf 90°C erhitzt und innerhalb von 2 Stunden unter Rühren mit 745 g 40%iger Formaldehydlösung, in der 32 g Oxalsäure gelöst sind, versetzt. Es wird noch 8 Stunden bei 90°C nachkondensiert. Danach wird bis zu einer Innentemperatur von 170°C bei 20 mbar destilliert. Rückstand 972 g eines nahezu farblosen Harzes mit einem Erweichungspunkt von 125°C. Das Harz wird, gelöst in 972 g Isopropanol, in einem Autoklaven vorgelegt und mit 10 g KOH-Pulver versetzt. Danach wird mit Stickstoff gespült und auf 130°C aufgeheizt. Bei dieser Temperatur und einem Druck von 3 bis 7 bar werden unter Rühren 2 495 g Äthylenoxid portionsweise aufgepreßt. Anschließend wird 3 Stunden nachgerührt und dann das Lösungsmittel unter vermindertem Druck entfernt. Rückstand: 3 540 g einer farblosen, wasserverdünnbaren Flüssigkeit mit einer Viskosität von 1 bis 2 Pa.s.

B) 1 100 g Phenol, 509 g 37.5%ige Formaldehydlösung und 11 g Zinkacetat-dihydrat werden 90 Minuten am Rückfluß erhitzt. Anschließend wird bis zu einer Innentemperatur von 160°C bei 20 mbar destilliert. Rückstand: 970 g eines hellgelben Harzes vom Erweichungspunkt 70°C.

BA) Das Harz wird wie im Herstellbeispiel A beschrieben mit 2 495 g Äthylenoxid umgesetzt, Rückstand: 3 390 g einer wasserverdünnbaren Flüssigkeit mit einer Viskosität von 1 bis 1,5 Pa.s.

BB) Das Harz wird wie im Herstellbeispiel A beschrieben mit 1 665 g Äthylenoxid umgesetzt. Rückstand: 2 560 g eines wasserlöslichen, hochviskosen bis wachsartigen Produktes.

Beispiel 1

950 g Melamin
960 g 40%ige wäßrige Formaldehydlösung
80 g äthoxylierter Novolak nach Herstellbeispiel A
450 g Wasser und
10 ml 10%ige Kalilauge

werden unter ständiger Kontrolle des pH-Wertes, der bei 8,5 bis 9 liegen soll, bis zu einer Wasserverdünnbarkeit von 1 : 1,5 bei 95°C kondensiert. Die Lösung wird abgekühlt und mit 8,8 ml einer 60%igen Lösung eines Morpholinsalzes der p-Toluolsulfosäure versetzt. Mit dieser Harlösung (Flotte) wird ein ca. 110 $g/m^2$ schweres weißes Dekorpapier imprägniert und bei 130°C bis auf eine Restfeuchte von ca. 6,5 bis 7,0% (gemessen nach einer Trocknung von 5 Minuten bei 160°C) getrocknet. Der Harzanteil beträgt 55 bis 60%.

Das Papier wird anschließend auf eine Holzspanplatte (Dichte ca. 700 $kg/m^3$) aufgelegt und zwischen hochglanzverchromten Stahlblechen mit einer Preßzeit von 3 Minuten bei einer Preßtemperatur von 170°C verpreßt. Der Preßdruck beträgt 20 $N/mm^2$.

Nach Rückkühlung auf ca. 60°C und Entformen erhält man eine einwandfrei geschlossene, hochglänzende Oberfläche. Der Aushärtungsgrad entspricht der Stufe 1 bis 2. Nach der Temperprüfung, die 17 Stunden bei 70°C durchgeführt wurde, wird eine rißfreie Oberfläche erhalten. Nach Behandeln mit Wasserdampf ist keine Veränderung der Oberfläche festzustellen.

*Vergleichsversuch*

Es wird eine Melaminharzlösung nach den Angaben im Beispiel 1 hergestellt, jedoch ohne Zusatz an äthoxyliertem Novolak und unter gleichen Bedingungen wie dort beschrieben verarbeitet.

Nach dem Entfernen wird eine geschlossene Oberfläche und ein Kitontest von Stufe 1 bis 2 erhalten. Nach der Temperprüfung war die Oberfläche jedoch mit Rissen übersät. Die Behandlung mit Wasserdampf führte ebenfalls zu Rißbildung.

Beispiel 2

Es wird eine Melaminharzlösung nach den Angaben des Beispiels 1 hergestellt, die anstelle des

äthoxylierten Novolaks nach Herstellbeispiel A die gleiche Menge äthoxylierten Novolak nach Herstellbeispiel BA enthält. Die Herstellung des getränkten Papiers erfolgt wie im Beispiel 1 beschrieben. Das Papier wird unter sogenannten Kurztaktbedingungen, sonst wie vorstehend beschrieben, auf eine Spanplatte aufgepreßt:

| | |
|---|---|
| Preßzeit: | 50 Sekunden |
| Preßtemperatur: | 190°C |
| Preßdruck: | 2 N/mm² |

und ohne Rückkühlung der Presse entnommen.

Die erhaltene Oberfläche ist geschlossen und zeigt die Härtungstufe 4. Sie übersteht die Temperprüfung sowie Behandlung mit Wasserdampf unverändert.

Beispiel 3

616 g Melamin
832 g 40%ige wäßrige Formaldehydlösung
120 g Harnstoff
28 g Caprolactam
55 g äthoxylierter Novolak gemäß Herstellbeispiel BA
40 ml 50%ige Kalilauge und
200 ml Trinkwasser

werden unter ständiger Kontrolle des pH-Wertes, der bei 8,5 bis 9 liegen soll, bei 98°C solange kondensiert, bis eine mit der fünffachen Menge siedendem Wasser versetzte Probe beim Abkühlen auf 50°C eintrübt. Nach Abkühlen auf Raumtemperatur werden 25 ml einer 60%igen Lösung des Morpholinsalzes von p-Toluolsulfosäure zugesetzt. Die weitere Verarbeitung geschieht wie in Beispiel 1 beschrieben

Nach Entformen wird eine geschlossene, glänzende Oberfläche mit der Härtungsstufe 2 bis 3 erhalten, die weder nach Temperung noch nach Einwirkung von Wasserdampf Veränderungen aufweist.

Vergleichsversuch zu Beispiel 3

Es wird eine Harzlösung ohne Zusatz des ethoxylierten Novolaks hergestellt und wie dort beschrieben verarbeitet. Die erhaltene Oberfläche ist jedoch nach dem Temperungstest stark gerissen und weist nach Wasserdampfbehandlung neben Rissen auch Blasen auf.

Beispiel 4

917 g Melamin
955 g einer 40%igen wäßrigen Formaldehydlösung
20 g Caprolactam
20 g Thioharnstoff
65 g äthoxylierter Novolak nach Herstellbeispiel BA
365 g Wasser und
8 ml 10%ige Kalilauge

werden bei 95°C und bei einem pH von 8,5 bis 9,3 solange kondensiert, bis eine mit der fünffachen Menge siedendem Wasser versetzte Probe beim Abkühlen auf 48°C eintrübt. Anschließend wird auf Raumtemperatur abgekühlt.

Beispiel 5

Es wird verfahren wie in Beispiel 4 beschrieben, wobei jedoch der Anteil an äthoxyliertem Novolak auf 25 g reduziert wird.

Beispiel 6

Es wird verfahren wie in Beispiel 4 beschrieben, wobei jedoch anstelle des äthoxylierten Novolaks nach Herstellbeispiel BA die gleiche Menge Novolak nach Beispiel BB verwendet wird.

Vergleichsversuche zu Beispiel 4 bzw. 5 bzw. 6

Es werden Harzlösungen hergestellt, die anstelle der äthoxylierten Novolak-Zubereitungen jeweils folgende Zusätze enthalten:

4 a) 65 g Äthylenglykol, 40 g Dimethylformamid und 30 g Butandiol-1,4
4 b) 65 g Phenoxyäthanol

4 c) 65 g Triäthylenglykol
4 d) kein Zusatz.

Die Harzlösungen der Beispiele und der Vergleichsversuche werden jeweils mit 0,35% einer 60%igen wäßrigen Lösung des Morpholinsalzes der p-Toluolsulfosäure versetzt. Mit den so vorbereiteten Flotten werden weiße Dekorpapiere von 80 g/m² mit 140% Harzauftrag (bezogen auf Papiergewicht) und einem Restfeuchtegehalt von 6,0 bis 6,5% imprägniert. Das Verpressen der Filme erfolgt wie im Beispiel 1 beschrieben. Die erhaltenen Oberflächeneigenschaften sind in der folgenden Tabelle zusammengefaßt:

| Verwendete Harzlösung | Geschlossenheit | Glanz | Kitontest Stufe | Beurteilung nach Temperung | Behandlung mit Wasserdampf |
|---|---|---|---|---|---|
| Beispiel 4 | gut | hochglänzend | 2 | unverändert | unverändert |
| Beispiel 5 | gut | hochglänzend | 2 | unverändert | unverändert |
| Beispiel 6 | gut | hochglänzend | 2 | unverändert | unverändert |
| Vergleichsversuch 4 a) | gut | glänzend | 2—3 | unverändert | starker Glanzverlust |
| Vergleichsversuch 4 b) | gut | hochglänzend | 2—3 | gerissen | Glanzverlust, Haarisse |
| Vergleichsversuch 4 c) | gut | hochglänzend | 2—3 | gerissen | Glanzverlust, Haarrisse |
| Vergleichsversuch 4 d) | gut | hochglänzend | 2 | stark gerissen | gerissen |

**Patentansprüche**

1. Verfahren zur Herstellung von Aminoplastharzen, die zur Oberflächenbeschichtung geeignet sind ("Tränkharzen"), durch Kondensation von Carbonylverbindungen und Aminoplastbildnern und gegebenenfalls Alkanolen, wobei vor, während oder nach der Kondensation modifizierende Mittel zugesetzt werden, dadurch gekennzeichnet, daß man als modifizierendes Mittel ein Kondensationsprodukt aus Formaldehyd und einem Phenol mit einen Molverhältnis von Formaldehyd zu Phenol zwischen 0,4 : 1 und 0,9 : 1, das zur selbständigen Härtung nicht befähigt ist ("Novolak") und mit wenigstens 2 Mol Athylenoxid je Mol Phenol umgesetzt wurde, in einer wirksamen Menge zusetzt.

2. Verfahren nach Anspruch 1, dadurch gekennzeichnet, daß man als Aminoplastbildner Melamin und als Carbonylverbindung Formaldehyd ausschließlich oder überwiegend verwendet.

3. Verfahren nach Anspruch 1, dadurch gekennzeichnet, daß man das Kondensationsprodukt in einer Menge von bis zu 15%, bezogen auf den Gehalt des Harzes bzw. seiner Lösung an Carbonylverbindungen und Aminoplastbildnern zusetzt.

**Revendications**

1. Procédé de préparation de résines aminoplastes convenant pour l'enduction de surfaces (résines d'imprégnation) par condensation de composés carbonylés et de précurseurs d'aminoplastes, avec addition avant, pendant ou après la condensation, d'agents modifiants, caractérisé en ce que l'on ajoute comme agent modifiant un produit de la condensation du formaldéhyde et d'un phénol avec un rapport molaire du formaldéhyde au phénol entre 0.4 : 1 et 0,9 : 1, qui n'est pas capable de durcir par lui-même (novolaque) et que l'on a fait réagir avec au moins 2 moles d'oxyde d'éthylène par mole de phénol, en une proportion efficace.

2. Procédé suivant la revendication 1, caractérisé en ce que l'on emploie exclusivement ou en proportion prédominante la mélamine comme précurseur d'aminoplaste et le formaldéhyde comme composé carbonylé.

3. Procédé suivant la revendication 1, caractérisé en ce que l'on ajoute le produit de condensation en une proportion pouvant aller jusqu'à 15% par rapport à la teneur de la résine ou de la solution de celle-ci en composés carbonylés et en précurseurs d'aminoplaste.

## Claims

1. A process for the production of aminoplasts, suitable for surface coating (impregnating resins), by condensation of carbonyl compounds and aminoplast-forming agents, modifiers being added before, during or after the condensation, characterized in that a condensation product of formaldehyde and a phenol in a molar ratio of formaldehyde to phenol of from 0.4 : 1 to 0.9 : 1, which condensation product is not capable of curing by itself (novolak) and has been reacted with at least 2 moles of ethylene oxide per mole of phenol, is added as modifier in an effective amount.

2. A process as claimed in claim 1, characterized in that melamine and formaldehyde are used exclusively or predominantly as aminoplast-forming agent and carbonyl compound respectively.

3. A process as claimed in claim 1, characterized in that the condensation product is added in an amount of up to 15%, based on the amount of carbonyl compounds and aminoplast-forming agents contained in the resin, i.e. its solution.